(19) Europäisches Patentamt

European Patent Office

Office européen des brevets

(11) **EP 0 981 698 B1**

(12) **EUROPÄISCHE PATENTSCHRIFT**

(45) Veröffentlichungstag und Bekanntmachung des Hinweises auf die Patenterteilung:
**31.10.2001 Patentblatt 2001/44**

(21) Anmeldenummer: **99920531.3**

(22) Anmeldetag: **01.06.1999**

(51) Int Cl.[7]: **F16H 21/46**, F16H 7/00

(86) Internationale Anmeldenummer:
**PCT/CH99/00236**

(87) Internationale Veröffentlichungsnummer:
**WO 99/57461 (11.11.1999 Gazette 1999/45)**

(54) **ANTRIEB FÜR INVERSIONSKINEMATISCHE VORRICHTUNG**

DRIVE SYSTEM FOR AN INVERSE KINEMATICS DEVICE

SYSTEME D'ENTRAINEMENT POUR DISPOSITIF CINEMATIQUE INVERSE

(84) Benannte Vertragsstaaten:
**AT BE CH DE ES FR GB IT LI NL PT**

(30) Priorität: **24.12.1998 CH 256798**

(43) Veröffentlichungstag der Anmeldung:
**01.03.2000 Patentblatt 2000/09**

(73) Patentinhaber: **Oloid AG**
**4053 Basel (CH)**

(72) Erfinder: **SALGO, Reinhold, C.**
**CH-8635 Dürnten (CH)**

(74) Vertreter: **Salgo, Reinhold Caspar, Dr.**
**Rütistrasse 103**
**8636 Wald (CH)**

(56) Entgegenhaltungen:
**EP-A- 0 655 568        WO-A-93/18850**
**DE-A- 2 338 865        DE-B- 1 291 152**

• **PATENT ABSTRACTS OF JAPAN vol. 014, no. 069 (M-0932), 8. Februar 1990 (1990-02-08) & JP 01 288657 A (ORION MACH CO LTD;OTHERS: 01), 20. November 1989 (1989-11-20)**

## Beschreibung

Vorliegende Erfindung betrifft einen Antrieb für eine inversionskinematische Vorrichtung nach dem Oberbegriff des Patentanspruches 1.

Inversionskinematische Vorrichtungen sind mehrere bekannt und gehen in der Regel zurück auf Paul Schatz (1898-1979) entweder direkt als Erfinder oder mittelbar auf ihn als Begründer der Inversionskinematik (siehe auch: Paul Schatz, Rhythmusforschung und Technik, Stuttgart 1975).

Eine solche inversionskinematische Vorrichtung weist in aller Regel zwei parallele gegenläufig drehende Achsen auf, deren Drehwinkelbeziehung lautet

$$\tan \varphi_1, = \frac{1}{2} \tan \varphi_2$$

und deren ungleichförmige Winkelgeschwindigkeiten der Beziehung gehorchen

$$\frac{\omega_1}{\omega_2} = 2 \frac{1 + \frac{1}{4}\tan^2 \varphi_1}{1 + \tan^2 \varphi_1}$$

sofern $\varphi_2$ durch $\varphi_1$ ersetzt ist.

Bei den obigen Beziehungen steht die Bezugsrichtung $\varphi_1 = \varphi_2 = 0$ senkrecht auf der Verbindungsgeraden der zwei Achsen; da die Drehachsen, wie gesagt, gegenläufig drehen, ist die positive Drehrichtung für $\varphi_1$ derjenigen von $\varphi_2$ entgegengesetzt.

Antriebe für eine solche inversionskinematische Vorrichtung sind bekannt, so z.B. aus CH 216 760 (D1), DE 1 145 455 (D2), DE 1 207 750 (D3), WO 80/01830 (D4), EP 0 176 749(D5), SU 1 607 922 (D6), US 5 265 (D7), WO-A-93 18850 (EP 0 584 301) (D8), EP 0 614 028 (D9),

Diese bekannten Vorrichtungen stellen mehrere Lösungs-Kategorien dar: D1 und D2 sind Zwanglaufs-Antriebe, d.h. sowohl die Winkelgeschwindigkeiten $\omega_1$, $\omega_2$ als auch die von den beiden Achsen abgegebenen Drehmomente und Leistungen werden durch den Antrieb a priori geliefert; die richtigen Winkelbeziehungen von $\varphi_1$ und $\varphi_2$ sind durch den Antrieb vorgegeben, und über das sog. Mittelglied der inversionskinematischen Vorrichtung findet kein Leistungsaustausch zwischen den beiden Achsen statt. Allerdings ist dies ein rein mathematisches Konzept: Fertigungs- und Einstellfehler wirken sich in grossen Belastungen vor allem der verschiedenen Lager aus.

D3 beschreibt prinzipiell ein Differentialgetriebe, das den konstruktiv inhärenten Ungleichlauf der beiden parallelen Achsen der inversionskinematischen Vorrichtung ausgleicht. Dies nun zum Preis einerseits eines grossen Leistungsaustausches über das genannte Mittelglied, andererseits einer starken Drehmomentenbelastung der inversionskinematischen, durch die beiden parallelen Achsen bewegten Gelenk-Kette.

D4 beschreibt einen Massen und Federelemente enthaltenden Energiespeicher, D5 einen hydraulischen Antrieb, D6 einen solchen mit Magnetkupplungen, die Gattungsbildende D8 schliesslich einen Antrieb mit zwei in Serie geschalteten Gleichstrommotoren. Diesen zuletzt genannten Antrieben haftet, wenn auch weniger augenfällig, derselbe Nachteil an, wie der Lösung mit Differentialgetriebe, nämlich die Beanspruchung der inversionskinematischen Gelenkkette durch Austausch-Drehmomente. In D7 besteht der Antrieb aus einem Induktionsmotor, welcher nur intermittierend Leistung abgibt, teuer in der Herstellung ist und einen kleinen Wirkungsgrad aufweist. D9 schliesslich beschreibt ein zwischen die beiden parallelen Achsen geschaltetes pendelndes Ausgleichsglied, welches bei genauer Analyse jedoch dieselben Charakteristika aufweist, wie die Antriebe nach D1 und D2.

Die Aufgabe der vorliegenden Erfindung ist die Schaffung eines Antriebes für inversionskinematische Vorrichtungen, welcher Zwanglaufeigenschaften aufweist, jedoch deren Nachteile vermeidet und kostengünstig herzustellen ist. Die Lösung der gestellten Aufgabe ist wiedergegeben im kennzeichnenden Teil des Patentanspruches 1 hinsichtlich seiner wesentlichen Merkmale, in den davon abhängigen Ansprüchen hinsichtlich weiterer vorteilhafter Ausgestaltungen.

Anhand der beigefügten Zeichnung wird der Erfindungsgedanke vermittels bevorzugter Ausführungsbeispiele näher erläutert.

Es zeigen:

Fig. 1a, b, c      den Stand der Technik im Aufriss, schematischem Grundriss und einer schematischen Perspektive.

Fig. 2a, b      ein erstes Ausführungsbeispiel in Auf- und Grundriss, teilweise geschnitten.

Fig. 3a, b      eine Variante zum ersten Ausführungsbeispiel, teilweise vergrössert.

Fig. 4a      ein zweites Ausführungsbeispiel im Grundriss.

Fig. 4b      ein Detail des zweiten Ausführungsbeispiels im Aufriss.

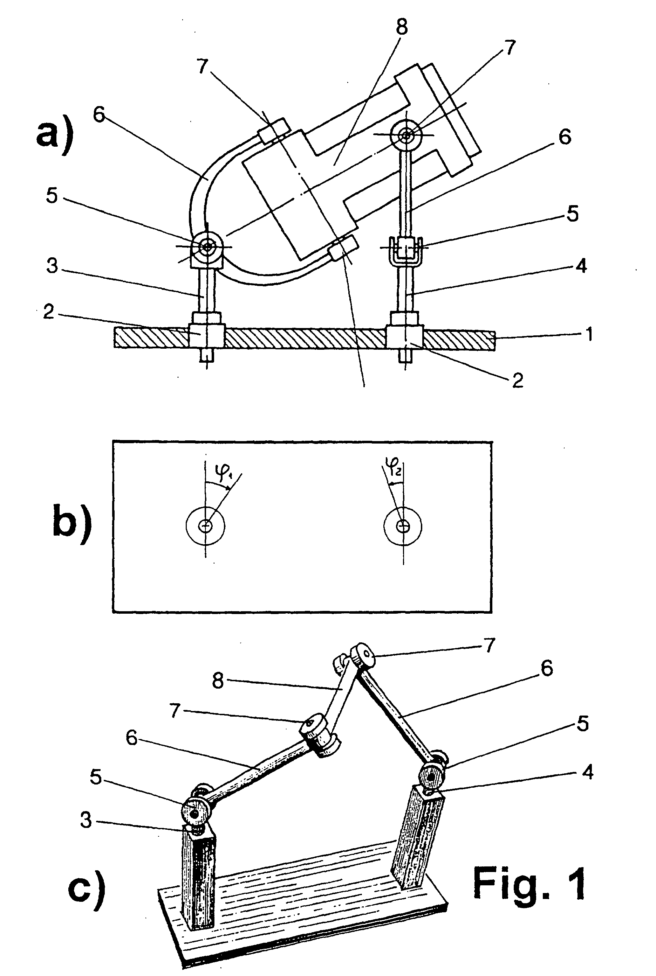

Fig. 1a ist der Aufriss einer inversionskinematischen Innenmischmaschine gemäss Stand der Technik, Fig. 1b deren Grundriss. Eine Grundplatte 1 trägt, in je einem Hauptlager 2 drehbar gelagert, zwei Achsen 3, 4. Diese sind parallel zueinander und gegenläufig bewegt. Dreht Achse 3 um den Winkel $\varphi_1$, so ist der Winkel der Achse 4 $\varphi_2$; die Beziehung der Winkel ist, wie genannt

$$\tan \varphi_1 = \frac{1}{2} \tan \varphi_2$$

Dies bedeutet auch, dass immer bei den Divergenzwerten des $\tan \varphi_1$ auch $\tan \varphi_2$ divergiert oder, dass nach einer Drehung von $n \cdot 90°$ von Achse 3 auch Achse 4 sich um $n \cdot 90°$ gedreht hat, wo $n = 1,2,3,4.....$

Fig. 1c ist die perspektivische Darstellung einer inversionskinematischen Gelenkkette, die nun im Vergleich mit Fig. 1a beschrieben wird. Jede Achse 3, 4 trägt an ihrem Ende ein Gelenk 5, dessen Drehachse senkrecht steht auf der Richtung der Achse 3, 4; in den Stellungen $\varphi_1 = \varphi_2$ stehen zudem die Achsen der Gelenke 5 senkrecht aufeinander. In Fig. 1c schliesst sich an das Gelenk 5 je eine Stange 6, welche an ihrem Ende wiederum ein Gelenk 7 aufweist, dessen Achse erneut senkrecht steht auf jener des Gelenkes 5. Verbunden sind die Gelenke 7 durch eine weitere Stange, die hier Mittelglied 8 genannt wird.

Betrachtet man nun Fig. 1a, so ist dort jede Stange 6 von Fig. 1c durch eine Gabel 6 ersetzt, allgemein und im Folgenden Randglied 6 genannt. Das Mittelglied 8 wird hier durch ein rohrartiges Element ersetzt, welches zur Aufnahme eines Behälters eingerichtet ist. Die mit 5, 6, 7, 8 bezeichneten Elemente bilden die Hälfte einer Gelenkkette nach Bricard (1897) oder einen halben Würfelgürtel nach Paul Schatz. Die instrumentellen Ausbildungen dieser Gelenkkette sind mannigfaltig und bekannt.

Wegen der ungleichförmigen Charakteristik der beiden Winkelgeschwindigkeiten $\omega_1$, $\omega_2$ der Achsen 3, 4 fällt ein direkter motorischer Antrieb - mit Ausnahme des aus D8 bekannten-praktisch ausser Betracht. Im genannten Buch von Paul Schatz befindet sich eine Darstellung von zwei aneinander ablaufenden Ovalrädern mit konstanter Geschwindigkeit ihrer Peripherie. In der Beschreibung dieser Figur wird allerdings bemerkt, dass diese keine technische Lösung sei, und der Autor hat den Einsatz solcher Ovalräder für einen Antrieb auch nicht weiter verfolgt.

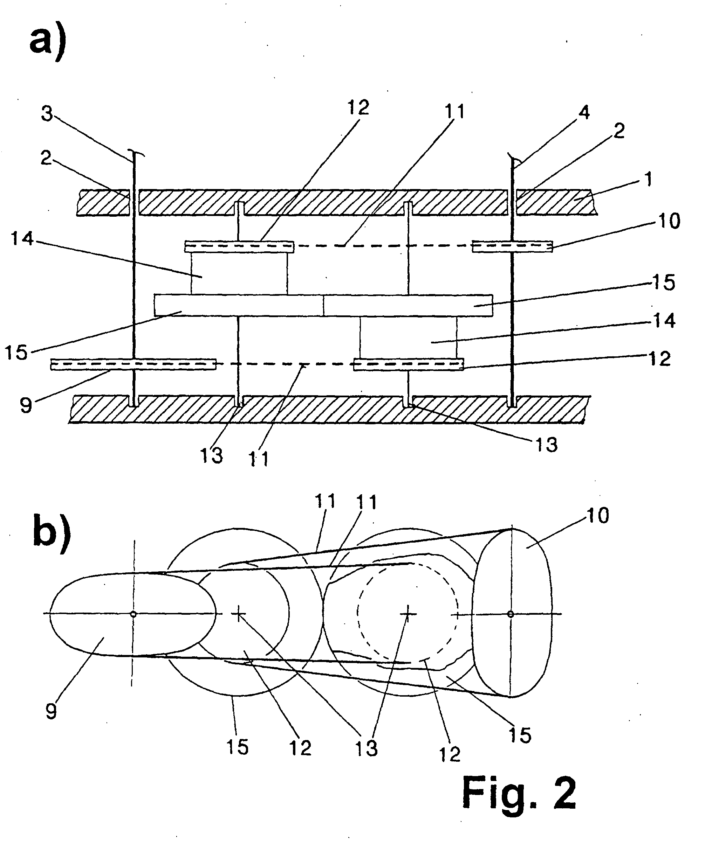

Fig. 2 zeigt schematisch ein erstes Ausführungsbeispiel einer technischen Lösung eines Antriebes mit Ovalrädern. Diese weisen ein Verhältnis von grossem an kleinem Durchmesser von $\frac{\ell}{b} = 2.0$ auf und genügen beim Aneinander-Abwälzen der Winkel- beziehung $\tan \varphi_1 = \frac{1}{2} \tan \varphi_2$

Fig. 2a ist ein schematischer Aufriss, teilweise im Schnitt, Fig. 2b eine Draufsicht von unten. Der Schnitt läuft durch die Grundplatte 1; die Lager 2 sind schematisch dargestellt. In der Darstellung von Fig. 2a ist die halbe Gelenkkette nach Fig. 1 oberhalb der Grundplatte und wird - da Stand der Technik - nicht weiter besprochen.

Direkt mit der Achse 3 verbunden ist ein erstes Ovalrad 9, ebenso mit der Achse 4 verbunden ist ein zweites Ovalrad 10; die Ovalräder 9, 10 sind beispielsweise identisch ausgeführt.

Um die Ovalräder 9, 10 laufen langgestreckte Zugelemente 11, wie beispielsweise Keil- oder Zahnriemen, Rundschnüre, Ketten bei jeweils entsprechender Ausgestaltung des Umfanges jedes Ovalrades 9, 10. Jedes Zugelement 11 läuft ausserdem um ein rundes Rad 12 mit der entsprechenden Ausgestaltung auf je einer Achse 13.

Bei der vorgesehenen Bewegung der Achsen 3, 4 sind die Umfangsgeschwindigkeiten der Ovalräder 9, 10 konstant, und abgesehen vom Drehsinnm, gleich. Um den durch die Nichtparallelität der Zugelemente 11 eingeführten Fehler auszugleichen - und zur Kompensation von Fertigungs- und Einstell-Toleranzen - sind die Räder 12 über je eine elastische Kupplung 14 an sich bekannter Bauart mit den Achsen 13 verbunden. Die Achsen 13 drehen nun gleichförmig und gegenläufig. Als Ausführungsbeispiel ohne beschränkenden Charakter sind die elastischen Kupplungen 14 mit je einem Zahnrad 15 verbunden, wobei diese im direkten Eingriff stehen. Selbstverständlich gibt es viele weitere Möglichkeiten die Räder 12 gleich schnell, gleichförmig und gegenläufig drehen zu lassen. Sie sind dem Fachmann bekannt und sind nicht Teil des Erfindungsgedankens.

Die Achsen 13 der Räder 12 sind beispielsweise ebenfalls in der Grundplatte 1 gelagert. Die anderen Lager der Achsen 3, 4, 13 befinden sich in einer Platte 16, die parallel zur Grundplatte angeordnet und mit dieser verbunden ist.

Werden Zugelemente 11 verwendet, die geeignete Eigenelastizität aufweisen, wie beispielsweise Rundschnüre aus Elastomer, so können die elastischen Kupplungen 14 entfallen. Wesentlich ist jedoch das Vorhandensein eines elastischen Elementes im Kraftfluss von den gleichförmig drehenden Achsen - beispielsweise Achsen 13 - zu den ungleichförmig drehenden Achsen 3, 4. Die Antriebsleistung der gleichförmig drehenden Achsen 13 wird in der Regel durch einen Elektromotor geliefert, kann aber selbstverständlich aus jeder geeigneten Energiequelle, also auch aus einem Handkurbelantrieb bestehen; der Antrieb erfolgt also von aussen.

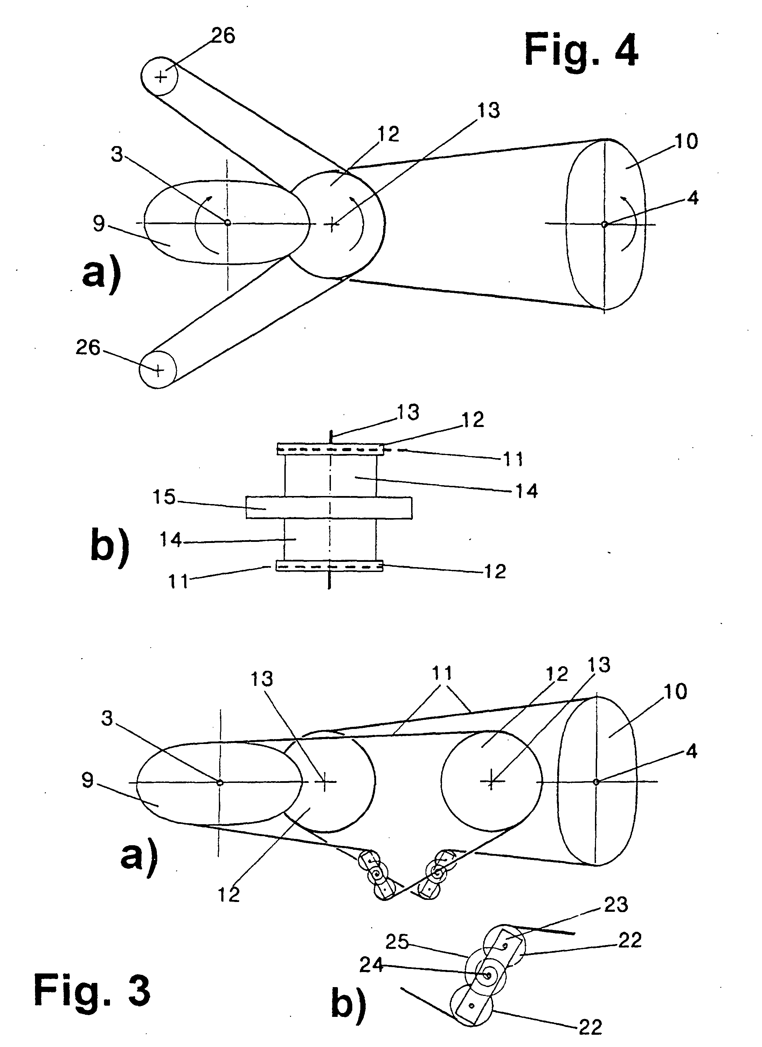

Fig. 3 ist die Darstellung einer Variante zum elastischen Element in der Kraftübertragung, was in Fig. 2 als elastische Kupplung 14 beschrieben ist. Das Zugelement 11 - wie vorstehend eine Kette, ein Zahnriemen, Keilriemen oder eine armierte Rundschnur - umläuft je auf der Antriebsseite zwei Rollen 22, die auf einem Schwenkarm 23 beispielsweise symmetrisch angeordnet sind. Der Schwenkarm 23 schwenkt um eine Achse 24 und wird durch die Kraft einer elastischen Feder 25 - hier als Spiralfeder dargestellt - in die Stellung gebracht, in der das Zugelement 11 die grösste Spannung aufweist. Zur besseren Sichtbarkeit ist das zum Ovalrad gehörige elastische Element noch vergrössert dargestellt. Das aus den Elementen mit den Bezugszeichen 22, 23, 24, 25 bestehende elastische Element ist, wie beschrieben, auf der Antriebsseite des Zugelementes 11 angeordnet und hat daher nicht die Aufgabe eines bekannten Ketten- oder Riemenspanners, welcher grundsätzlich auf der kraftlosen, oder mindestens kraftarmen Abtriebsseite angeordnet wird. Es übernimmt wieder den notwendigen Ausgleich der aus den Winkellagen des Zugelementes 11 herrührenden Geometrieabweichungen.

Es ist im Erfindungsgedanken mitenthalten, das auf das Zugelement 11 einwirkende elastische Element anders auszuführen, solange damit die Aufgabe des kraftabhängigen Längenausgleichs des Zugelementes 11 gelöst wird. Dem Fachmann sind andere Lösungen als die dargestellte geläufig.

Fig. 4 ist eine - zwar topologisch identische, jedoch ausführungsmässig unterschiedliche - Variante zu Fig. 2. Fig. 4a zeigt die Variante in der Draufsicht von unten, Fig. 4b ist ein Aufriss des elastischen Elementes. Letzteres ist aufgebaut aus beispielsweise einem Zahnrad 15, das beidseitig je eine elastische Kupplung 14 angeflanscht trägt. Jede der elastischen Kupplungen 14 beaufschlagt ein Rad 12 für den Antrieb je eines Zugelementes 11. Das in Fig. 4b untere Rad 12 treibt das Ovalrad 10 in nun bekannter Weise an; das in Fig. 4b obere treibt das Ovalrad 9 an dergestalt, dass das zugehörige Zugelement 11 zwei Umlenkrollen 26 umläuft und dann aussen am Ovalrad 9 anliegt. Damit liegt am Rad 12 die Innenseite des Zugelementes 11 an, am Ovalrad 9 die Aussenseite was die Umkehrung Drehsinnes von Rad 12 und Ovalrad 9 bewirkt.

Der Vorteil dieser Anordnung ist die Einsparung einer den Drehsinn der Räder 12 umkehrenden Vorrichtung zum Preis des Symmetrieverlustes.

Auch hier ist wiederum jedem Zugelement 11 ein elastisches Element - hier die elastische Kupplung 14 - zugeordnet.

Bei allen beschriebenen Anordnungen kann es zweckmässig sein, jeweils die Abtriebsseite des Zugelementes 11 noch durch die Kraft eines konventionellen jedoch weichen Kettenspanners - oder einer anderen, dem Zugelement 11 angepassten Spannvorrichtung zu beaufschlagen. Dies ist ohne Einfluss auf kinematische Gegebenheiten und sorgt nur für den Längenausgleich des Zugelementes 11.

**Patentansprüche**

1. Antrieb für eine inversionskinematische Vorrichtung mit zwei parallelen, gegenläufig bewegten und ungleichförmig drehenden Achsen (3, 4), deren Drehwinkelbeziehung

$$\tan \varphi_1 = \frac{1}{2} \tan \varphi_2$$

lautet und welcher Antrieb durch mindestens eine im wesentlichen gleichförmig drehenden Achse von aussen mit Leistung versorgt wird, **dadurch gekennzeichnet, dass**

- jede der Achsen (3, 4) ein Ovalrad (9, 10) trägt, dessen Ovalität der genannten Winkelbeziehung entspricht, und das mit der zugehörigen Achse (3, 4) starr verbunden ist und dessen Umfang zur kraftschlüssigen Aufnahme eines Zugelementes (11) eingerichtet ist,

- mindestens ein gleichförmig umlaufendes und aussen angetriebenes Rad (12) vorhanden ist, dessen Umfang kraftschlüssig zur Aufnahme und zum Antrieb des Zugelements (11) eingesetzt ist,

- zwei Zugelemente (11) vorhanden sind zur Uebertragung von Drehmomenten und Leistung von dem mindestens einen Rad (12) auf die Ovalräder (9, 10),

- jeder aus Rad (12), Zugelement (11) und Ovalrad (9, 10) bestehende Antriebsstrang ein elastisches Element aufweist, welches mindestens die aus der Nichtparallelität der Zugelemente (11) herrührende Verletzung der Konstanz der Umfangsgeschwindigkeit der Ovalräder (9, 10) ausgleichen kann,

- die genannten elastischen Elemente im Uebergang von der gleichförmigen zu ungleichförmigen Drehung angeordnet sind.

2. Antrieb für eine inversionskinematische Vorrichtung nach Patentanspruch 1, **dadurch gekennzeichnet, dass** zwei gleichförmig und gegenläufig umlaufende und von aussen angetriebene Räder (12) vorhanden sind.

3. Antrieb für eine inversionskinematische Vorrichtung nach Patentanspruch 2, **dadurch gekennzeichnet, dass** das in jedem genannten Antriebsstrang vorhandene elastische Element eine elastische Kupplung (14) ist.

4. Antrieb für eine inversionskinematische Vorrichtung nach Patentanspruch 2, **dadurch gekennzeichnet, dass** das in jedem genannten Antriebsstrang vorhandene elastische Element eine Spannvorrichtung für das Zugelement (11) ist.

5. Antrieb für eine inversionskinematische Vorrichtung nach Patentanspruch 3 oder 4, **dadurch gekennzeichnet, dass** das Zugelement (11) eine Kette ist.

6. Antrieb für eine inversionskinematische Vorrichtung nach Patentanspruch 3 oder 4, **dadurch gekennzeichnet, dass** das Zugelement (11) ein Zahnriemen ist.

7. Antrieb für eine inversionskinematische Vorrichtung nach Patentanspruch 3 oder 4, **dadurch gekennzeichnet, dass** das Zugelement (11) eine armierte Rundschnur ist.

**8.** Antrieb für eine inversionskinematische Vorrichtung nach Patentanspruch 2, **dadurch gekennzeichnet, dass** das Zugelement (11) eine elastische Rundschnur ist.

**9.** Antrieb für eine inversionskinematische Vorrichtung nach Patentanspruch 1, **dadurch gekennzeichnet, dass** nur ein gleichförmig umlaufendes und von aussen angetriebenes Rad (12) vorhanden ist, das jedoch zum Antrieb von zwei zugelementen (11) eingerichtet ist.

**10.** Antrieb für eine inversionskinematische Vorrichtung nach Patentanspruch 9, **dadurch gekennzeichnet, dass**

- das Rad (12) zwei elastische Kupplungen aufweist, die je den Antrieb eines Zugelementes (11) beaufschlagen, die beide das Rad (12) umschlingen,
- wobei das eine Zugelement (11) das eine Ovalrad (10) umschlingt, das andere mittels mindestens zweier Umlenkrollen (26) an das andere Ovalrad (9) kraftschlüssig angelegt ist, es jedoch nicht umschlingt.

**11.** Antrieb für eine inversionskinematische Vorrichtung nach Patentanspruch 10, **dadurch gekennzeichnet, dass** das Zugelement (11) eine Kette ist.

**12.** Antrieb für eine inversionskinematische Vorrichtung nach Patentanspruch 10, **dadurch gekennzeichnet, dass** das Zugelement (11) ein doppelseitiger Zahnriemen ist.

**13.** Antrieb für eine inversionskinematische Vorrichtung nach Patentanspruch 10, **dadurch gekennzeichnet, dass** das Zugelement (11) eine armierte Rundschnur ist.

**14.** Antrieb für eine inversionskinematische Vorrichtung nach Patentanspruch 9, **dadurch gekennzeichnet, dass** das in jedem Antriebsstrang vorhandene elastische Element eine Spannvorrichtung für das Zugelement (11) ist.

**15.** Antrieb für eine inversionskinematische Vorrichtung nach Patentanspruch 9, **dadurch gekennzeichnet, dass** das Zugelement (11) eine elastische Rundschnur ist.

**Claims**

**1.** A drive for an inverse kinematics device with two parallel moved in opposing directions and non-uniformly rotating axles (3, 4), whose angular relationship is

$$\tan\varphi_1 = \tfrac{1}{2}\tan\varphi_2$$

and whose drive is supplied from outside with power by at least one essentially uniformly rotating axle, **characterised in that**

- each of the axles (3, 4) carries an oval wheel (9, 10), whose ovality corresponds to the quoted angular relationship and which is firmly fixed to the associated axle (3, 4) and whose periphery is designed for the positive acceptance of a traction element (11),
- at least one uniformly rotating wheel (12), driven from outside, is present, whose periphery is designed for the positive acceptance and drive of the traction element (11),
- two traction elements (11) are present for the transmission of turning moments and power from the at least one wheel (12) onto the oval wheels (9, 10),
- each drive chain comprising wheel (12), traction element (11) and oval wheel (9, 10) has an elastic element, which can at least compensate for any impairment of the constancy of peripheral velocity of the oval wheels (9, 10) brought about by the non parallelity of the traction elements (11),
- the quoted elastic elements are arranged in the transfer from the uniform rotation to the nonuniform rotation.

**2.** A drive for an inverse kinematics device according to Claim 1, **characterised in that** two uniformly and counter rotating wheels (12), driven from outside are present.

**3.** A drive for an inverse kinematics device according to Claim 2, **characterised in that** in each quoted drive chain the elastic element present is an elastic coupling (14).

**4.** A drive for an inverse kinematics device according to Claim 2, **characterised in that** in each quoted drive chain the elastic element present is a tensioning device for the traction element (11).

**5.** A drive for an inverse kinematics device according to Claim 3 or Claim 4, **characterised in that** the elastic element (11) is a chain.

**6.** A drive for an inverse kinematics device according to Claim 3 or Claim 4, **characterised in that** the elastic element (11) is a toothed belt.

**7.** A drive for an inverse kinematics device according to Claim 3 or Claim 4, **characterised in that** the elastic element (11) is an armoured round cord.

**8.** A drive for an inverse kinematics device according to Claim 2, **characterised in that** the elastic element (11) is an elastic round cord.

**9.** A drive for an inverse kinematics device according to Claim 1, **characterised in that** only one uniformly rotating wheel (12), driven from outside, is present, which however is arranged to drive two traction elements (11).

**10.** A drive for an inverse kinematics device according to Claim 9, **characterised in that**

- the wheel (12) has two elastic couplings, each of which impact the drive of a traction element (11), the two surround the wheel (12),
- whereby the one traction element (11) surrounds an oval wheel (10), the other by means of at least two guide rollers (26) is applied with positive engagement to the other oval wheel (9), but does not surround it.

**11.** A drive for an inverse kinematics device according to Claim 10, **characterised in that** the traction element (11) is a chain.

**12.** A drive for an inverse kinematics device according to Claim 10, **characterised in that** the traction element (11) is a double sided toothed belt.

**13.** A drive for an inverse kinematics device according to Claim 10, **characterised in that** the traction element (11) is an armoured round cord.

**14.** A drive for an inverse kinematics device according to Claim 9, **characterised in that** the elastic element present in each drive chain is a tensioning element for the traction element (11).

**15.** A drive for an inverse kinematics device according to Claim 9, **characterised in that** the traction element (11) is an elastic round cord.

**Revendications**

**1.** Entraînement pour un dispositif cinématique d'inversion comprenant deux axes parallèles (3, 4) qui sont déplacés en sens inverse, qui tournent de manière irrégulière et dont le rapport d'angles de rotation est

$$\tan \varphi_1 = \tfrac{1}{2} \tan \varphi_2,$$

lequel entraînement est alimenté en puissance de l'extérieur par au moins un axe tournant sensiblement régulièrement, **caractérisé**

- **en ce que** chacun des axes (3, 4) porte une roue ovale (9, 10) dont la forme ovale correspond au rapport d'angles mentionné, qui est reliée rigidement à l'axe correspondant (3, 4) et dont la circonférence est prévue pour recevoir par force un élément de traction (11),
- **en ce qu'**il est prévu au moins une roue (12) qui tourne régulièrement, qui est entraînée de l'extérieur et dont la circonférence est utilisée pour recevoir et entraîner par force l'élément de traction (11),
- il est prévu deux éléments de traction (11) pour transmettre les couples de rotation et la puissance de la roue ou des roues (12) aux roues ovales (9, 10),
- **en ce que** chaque section d'entraînement formée de la roue (12), de l'élément de traction (11) et de la roue ovale (9, 10) comporte un élément élastique qui peut compenser au moins le non respect de la constance de la vitesse circonférencielle des roues ovales (9, 10) résultant du non parallélisme des éléments de traction (11), et
- **en ce que** les éléments élastiques sont disposés à l'endroit de la transition entre la rotation régulière et la rotation irrégulière.

**2.** Entraînement pour un dispositif cinématique d'inversion selon la revendication 1, **caractérisé en ce qu'**il est prévu deux roues (12) tournant régulièrement et en sens inverse et entraînées de l'extérieur.

**3.** Entraînement pour un dispositif cinématique d'inversion selon la revendication 2, **caractérisé en ce que** l'élément élastique prévu dans chaque section d'entraînement est un accouplement élastique (14).

**4.** Entraînement pour un dispositif cinématique d'inversion selon la revendication 2, **caractérisé en ce que** l'élément élastique prévu dans chaque section d'entraînement est un dispositif tendeur pour l'élément de traction (11).

**5.** Entraînement pour un dispositif cinématique d'inversion selon la revendication 3 ou 4, **caractérisé en ce que** l'élément de traction (11) est une chaîne.

**6.** Entraînement pour un dispositif cinématique d'inversion selon la revendication 3 ou 4, **caractérisé en ce que** l'élément de traction (11) est une courroie dentée.

**7.** Entraînement pour un dispositif cinématique d'inversion selon la revendication 3 ou 4, **caractérisé en ce que** l'élément de traction (11) est un cordon rond armé.

**8.** Entraînement pour un dispositif cinématique d'inversion selon la revendication 2, **caractérisé en ce que** l'élément de traction (11) est un cordon rond élastique.

9. Entraînement pour un dispositif cinématique d'inversion selon la revendication 1, **caractérisé en ce qu'**il n'est prévu qu'une roue (12) tournant régulièrement et entraînée de l'extérieur, qui est toutefois destinée à entraîner deux éléments de traction (11).

10. Entraînement pour un dispositif cinématique d'inversion selon la revendication 9, **caractérisé**

    - **en ce que** la roue (12) comporte deux accouplements élastiques qui sollicitent chacun l'entraînement d'un élément de traction (11) passant autour de la roue (12),
    - un premier élément de traction (11) passant autour d'une première roue ovale (10) tandis que l'autre est appliqué par force, à l'aide d'au moins deux poulies de renvoi (26), contre la seconde roue ovale (9), mais sans passer autour de celle-ci.

11. Entraînement pour un dispositif cinématique d'inversion selon la revendication 10, **caractérisé en ce que** l'élément de traction (11) est une chaîne.

12. Entraînement pour un dispositif cinématique d'inversion selon la revendication 10, **caractérisé en ce que** l'élément de traction (11) est une courroie dentée à deux faces.

13. Entraînement pour un dispositif cinématique d'inversion selon la revendication 10, **caractérisé en ce que** l'élément de traction (11) est un cordon rond armé.

14. Entraînement pour un dispositif cinématique d'inversion selon la revendication 9, **caractérisé en ce que** l'élément élastique prévu dans chaque section d'entraînement est un dispositif tendeur pour l'élément de traction (11).

15. Entraînement pour un dispositif cinématique d'inversion selon la revendication 9, **caractérisé en ce que** l'élément de traction (11) est un cordon rond élastique.

Fig. 1

## a)

## b)

Fig. 2

9

Fig. 4

Fig. 3